# EUROPÄISCHE PATENTSCHRIFT

(11) **EP 3 855 039 B1**
(45) Veröffentlichungstag und Bekanntmachung des Hinweises auf die Patenterteilung: **30.11.2022**
(21) Anmeldenummer: 21152922.7
(22) Anmeldetag: 22.01.2021
(51) Int. Cl.: F16D 65/00, F16D 65/18

(54) **AUS GUSSEISEN BESTEHENDER BREMSSATTEL**
CAST IRON BRAKE CALLIPER
ÉTRIER DE FREIN EN FONTE

(30) Priorität: 23.01.2020 DE 102020101503
(43) Veröffentlichungstag der Anmeldung: 28.07.2021
(73) Patentinhaber: KNORR-BREMSE Systeme für Nutzfahrzeuge GmbH, 80809 München (DE)
(72) Erfinder: HEINDL, Martin, 94535 Eging am See (DE); ROTH, Natalie, 94474 Aunkirchen (DE); HAUSER, Maximilian, 94081 Fürstenzell (DE); EBNER, Markus, 94099 Ruhstorf (DE)

(56) Entgegenhaltungen:
- WO-A1-2011/101076
- DE-A1- 4 416 175

## Beschreibung

Die vorliegende Erfindung betrifft einen aus Gusseisen bestehenden Bremssattel nach dem Oberbegriff des Anspruchs 1.

Ein derartiger Bremssattel einer Scheibenbremse, insbesondere einer Schiebesattel-Scheibenbremse dient der Aufnahme von Funktionsteilen, beispielsweise einer Zuspanneinrichtung, wobei diese Zuspanneinrichtung in einem Aufnahmeraum eines Sattelgehäuses positioniert ist, das eine durch einen Verschlussdeckel verschließbare Einschuböffnung aufweist.

Die Zuspanneinrichtung weist einen pneumatisch oder elektromotorisch betätigbaren Bremshebel auf, der bei Betätigung auf eine Brücke einwirkt, die verschieblich im Aufnahmeraum gelagert ist und in der mindestens ein Bremsstempel positioniert ist, mittels dessen bei einer Bremsung ein zuspannseitiger Bremsbelag gegen eine fahrzeugseitige Bremsscheibe pressbar ist.

Die Brücke ist an Führungsbahnen bei Betätigung des Bremshebels, also bei einer Bremsung, gleitend geführt. D.h., die Brücke liegt mit korrespondierenden Bereichen an den Führungsbahnen an.

Zur Ausbildung der Führungsbahnen werden die den Aufnahmeraum begrenzenden Seitenwände des Bremssattels sehr massiv, d.h. dick ausgeführt, wobei diese Wände gleichzeitig auch die Außenwände des Sattelgehäuses bilden.

Allerdings ergeben sich durch diese Materialanhäufung hinsichtlich der Gussqualität erhebliche Nachteile, beispielsweise durch eine längere Abkühlzeit eine geringe Materialhärte, die zu einem hohen Verschleiß der Führungsbahnen führt, was letztendlich dazu beiträgt, dass der Bremssattel nicht mehr gebrauchsfähig ist.

Überdies ist die Gefahr der Ausbildung von Lunkerstellen gegeben, die im besten Fall lediglich eine kostenintensive Bearbeitung der Führungsbahnen erfordern, aber auch eine Nichtverwendbarkeit des Bremssattels zur Folge haben können. Das heißt, die Ausschussquote in Bezug auf die vorgegebene hohe Qualität des Bremssattels ist relativ hoch und steht damit einer stets angestrebten Kostenoptimierung entgegen.

Ein gattungsbildender Bremssattel, bei dem die Führungsbahnen an den Seitenwänden des Bremssattels angeordnet sind, ist jeweils aus der DE 44 16 175 A1 sowie der WO 2011/101076 A1 bekannt.

Der Erfindung liegt die Aufgabe zugrunde, einen Bremssattel der gattungsgemäßen Art so weiterzuentwickeln, dass seine Herstellungskosten gesenkt und seine Standzeit verbessert wird.

Diese Aufgabe wird durch einen Bremssattel mit den Merkmalen des Anspruchs 1 gelöst.

Während der Bremssattel in Bezug auf die Führung der Brücke bislang überdimensioniert war, ist durch die Erfindung eine optimierte Gestaltung des Bremssattels erreicht, da die Führungsbahnen nunmehr so dimensioniert sind, dass sie genau der Belastung entsprechen, wie sie durch die Beanspruchung beim Verschieben der Brücke gegeben ist.

Die Materialanhäufungen im Bereich der Führungsbahnen, wie sie zum Stand der Technik mit ihren Nachteilen geschildert sind, sind bei dem neuen Bremssattel nicht mehr gegeben, so dass sowohl eine hohe Materialhärte im Bereich der Brückenführung erreicht wird wie auch die Gefahr einer Lunkerbildung in diesem Bereich deutlich reduziert ist.

Die gemäß der Erfindung angeformten Säulen können sehr schlank gestaltet sein und sind lediglich an ihren beiden Enden mit den zugeordneten oberen und unteren Wänden des Sattelgehäuses verbunden.

Um eine in Verschieberichtung ausreichende Länge der Führungsbahnen zu erhalten, kann die jeweilige Säule sich in Verschieberichtung erstreckende Ansätze aufweisen, so dass die jeweilige Führungsbahn fortgesetzt wird. Jede Führungsbahn ist quer zur Verschieberichtung, entsprechend der Ausbildung der Anlagefläche der Brücke, konkav gewölbt sind.

Durch die erfindungsgemäße Ausgestaltung des Bremssattels wird nicht nur eine höhere Standzeit erreicht, da der Verschleiß der Führungsbahnen minimiert wird, sondern darüber hinaus ergibt sich aus der Erfindung auch eine Gewichtsreduzierung des Bremssattels und damit der gesamten Scheibenbremse, so dass die Erfindung den entsprechenden Anforderungen gerecht wird. Dies führt u.a. zu einem geringeren Kraftstoffverbrauch mit den sich daraus ergebenden Vorteilen.

Des Weiteren ist der neue Bremssattel ohne konstruktiven und fertigungstechnischen Mehraufwand herstellbar, wobei lediglich die Kerngeometrie der Gussform entsprechend zu gestalten ist.

In an sich bekannter Weise besteht der Bremssattel bzw. das Sattelgehäuse aus Gusseisen mit Kugelgraphit (GJS), bei dem Kohlenstoff in Form von kugelförmigem Graphit vorliegt. Dieses Material zeichnet sich durch eine mit Stahl vergleichbare Festigkeit sowie eine hohe Zähigkeit und Zugfestigkeit aus, allesamt Eigenschaften, die für die Funktion des Bremssattels von besonderem Vorteil sind und daher gewünscht werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1: eine Teilansicht eines erfindungsgemäßen Bremssattels in einer perspektivischen Vorderansicht,
- Fig. 2: eine weitere Teilansicht des Bremssattels in einer geschnittenen schaubildlichen Draufsicht,
- Fig. 3: eine geschnittene Draufsicht des Bremssattels in einer perspektivischen Rückansicht.

In den Figuren ist jeweils ein Teil eines aus Gusseisen bestehenden Bremssattels dargestellt, mit einem Aufnahmeraum 2, in dem Funktionsteile einer Zuspanneinrichtung positionierbar sind, wobei diese Zuspanneinrichtung eine mit mindestens einem Bremsstempel bestückte Brücke aufweist. Im Falle einer Bremsung wird der Bremsstempel durch Verschieben der Brücke mittels eines Bremshebels gegen eine fahrzeugseitige Bremsscheibe gepresst.

Das Sattelgehäuse 1 weist Bohrungen 9 auf, von denen nur eine erkennbar ist und die der Aufnahme eines Gleitlagers dienen mit Führungsholmen, mittels derer der Bremssattel an einem fahrzeugseitigen Bremsträger befestigbar ist.

Zur Führung der Brücke, insbesondere in Verschieberichtung, sind in dem Aufnahmeraum 2 sich gegenüberliegende Führungsbahnen 5 vorgesehen, von denen in den Figuren lediglich eine abgebildet ist.

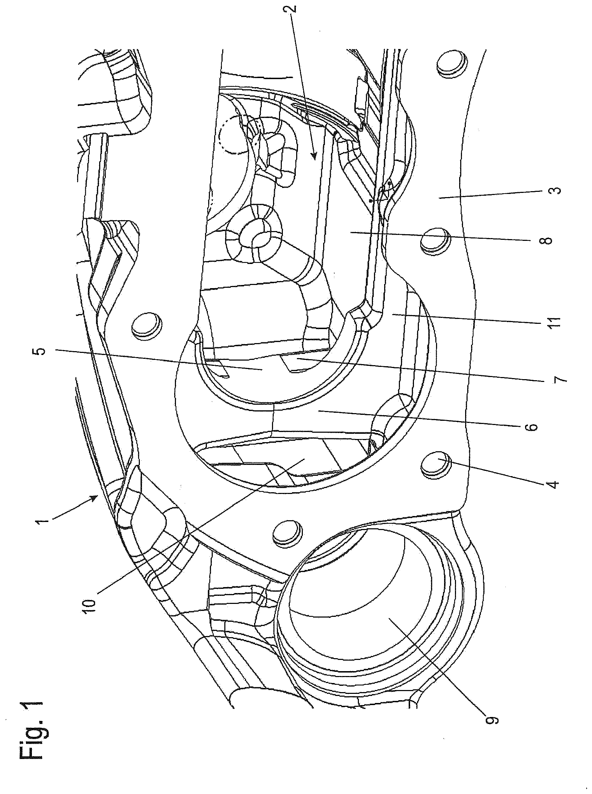

Die **Fig. 1** zeigt das Sattelgehäuse 1 von einer Vorderseite her, die für den Verschluss einer Einschuböffnung des Aufnahmeraumes 2 durch eine nicht dargestellte Verschlussplatte vorbereitet ist, wozu Gewindebohrungen 4 in das Sattelgehäuse 1 eingebracht sind zur Aufnahme von Schrauben, mit denen die Verschlussplatte befestigt wird. Dabei liegt die Verschlussplatte an einer den Aufnahmeraum 2 begrenzenden Auflagefläche 3 an.

In der Figur 1 ist zu erkennen, dass die sichtbare Führungsbahn 5 an einer Säule 6 vorgesehen ist, die beim Gießen des Bremssattels mit angeformt wird, wobei diese Säule 6 umfänglich frei steht, d.h. mit Abstand zur Innenwandung 10 des Aufnahmeraumes 2.

Dabei ist die Säule 6 ober- und unterseitig an den zugeordneten Wänden des Aufnahmeraumes 2 angegossen, wobei lediglich die untere Wand erkennbar ist und mit dem Bezugszeichen 8 gekennzeichnet ist.

Weiter ist zu sehen, dass die Führungsbahn 5 konkav gewölbt ist und beschreibt im Beispiel einen Halbkreis, der in seiner Kontur und seinem Abmaß an die Kontur bzw. die Abmessungen der einzusetzenden Brücke angepasst ist. Die Führungsbahnen 5 beider Säulen 6 sind auf deren einander zugewandten Seiten vorgesehen.

Die Säule 6 gehen in Stege 11 über, die an die oberen und unteren Wände 8 angeformt sind und die das Sattelgehäuse 1 verstärken.

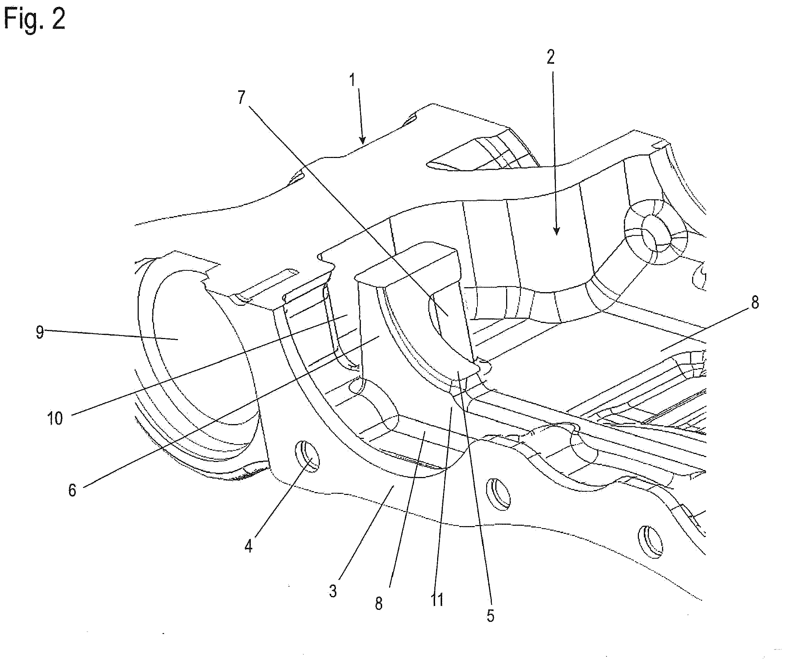

Die **Fig. 2** zeigt den Bremssattel aus der Fig. 1 in einer geschnittenen Draufsicht. Hier ist besonders deutlich zu erkennen, dass die Säule 6 einen seitlich sich anschließenden Ansatz 7 aufweist, der gleichfalls mit der unter und oberen Wand 8 durch Anformen in Verbindung steht. Dieser Ansatz 7 dient der Verlängerung der Führungsbahn 5 in Schieberichtung der Brücke, so dass die Säule 6 im Querschnitt rechteckig ausgebildet ist, wie erkennbar. Anstelle einer im Querschnitt mehreckigen Ausbildung der Säule 6 ist auch eine runde oder unrunde, d.h. elliptische Ausbildung denkbar.

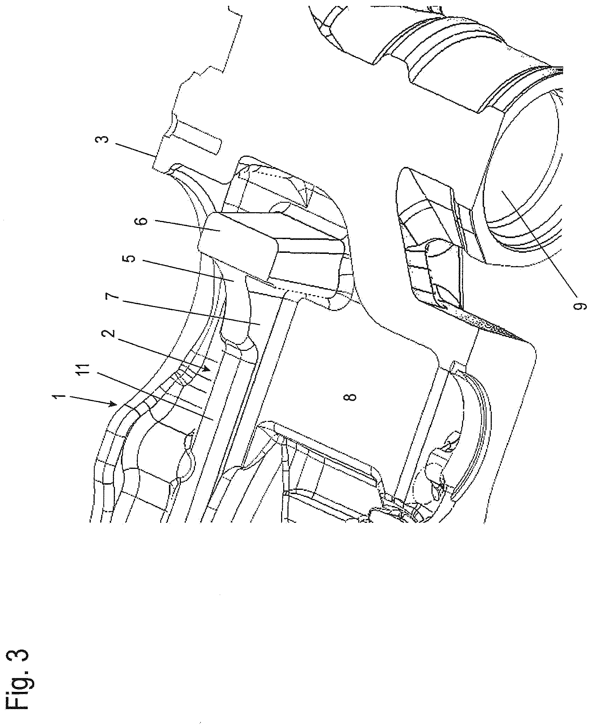

Eine Rückansicht des Bremssattels, gleichfalls in einer geschnittenen Draufsicht, ist in der **Fig. 3** abgebildet. Auch hier ist die Anordnung und Ausbildung der Säule 6 erkennbar, die im Übrigen in ihrer Höhe so ausgebildet ist, dass der Mittenbereich in seinen Abmaßen kleiner ist als die sich gegenüberliegenden Endbereiche.

### Bezugszeichenliste

- 1: Sattelgehäuse
- 2: Aufnahmeraum
- 3: Auflagefläche
- 4: Gewindebohrung
- 5: Führungsbahn
- 6: Säule
- 7: Ansatz
- 8: obere und untere Wand
- 9: Bohrung
- 10: Innenwandung
- 11: Steg

## Patentansprüche

1. Aus Gusseisen bestehender Bremssattel einer Scheibenbremse für ein Nutzfahrzeug, mit einem durch einen Verschlussdeckel verschließbaren, in einem Sattelgehäuse (1) angeordneten Aufnahmeraum (2) für eine Brücke einer Zuspanneinrichtung, wobei der Aufnahmeraum (2) Führungsbahnen (5) aufweist, an denen die Brücke in montierter Stellung verschiebbar anliegt
**dadurch gekennzeichnet, dass**
die Führungsbahnen (5) an sich quer zur Verschieberichtung der Brücke gegenüberliegenden frei stehend angeformten Säulen (6) ausgebildet sind, die jeweils mit ihren beiden Enden an den zugeordneten oberen und unteren Wänden (8) des Sattelgehäuses (1) angegossen sind.

2. Bremssattel nach Anspruch 1,
**dadurch gekennzeichnet, dass**
die sich gegenüber liegenden Führungsbahnen (5) konkav ausgebildet sind, insbesondere als Halbkreis.

3. Bremssattel nach Anspruch 1 oder 2,
**dadurch gekennzeichnet, dass**
die Säulen (6) abständig zu den seitlichen Innenwandungen (10) des Sattelgehäuses (1) angeordnet sind.

4. Bremssattel nach einem der vorhergehenden Ansprüche,
**dadurch gekennzeichnet, dass**
zur Verlängerung der Führungsbahn (5) in Schieberichtung der Brücke an jeder Säule (6) ein Ansatz (7) angeformt ist.

5. Bremssattel nach einem der vorhergehenden Ansprüche,
**dadurch gekennzeichnet, dass**
jede Säule (6) im Querschnitt mehreckig, rund oder unrund ausgebildet ist.

6. Bremssattel nach einem der vorhergehenden Ansprüche,
**dadurch gekennzeichnet, dass**
sich das Querschnittsabmaß jeder Säule (6), ausgehend von den beiden sich gegenüberliegenden Grundflächen (8) zur Mitte hin verkleinert.

7. Bremssattel nach einem der vorhergehenden Ansprüche,
**dadurch gekennzeichnet, dass**
die beiden sich gegenüberliegenden Säulen (6) durch an jeder Wand (8) angegossene Stege (11) miteinander verbunden sind.

## Claims

1. A cast-iron brake calliper of a disk brake for a utility vehicle, having a receiving chamber (2) for a bridge of a brake application device, this receiving chamber being positioned in a calliper housing (1), being closable by means of a cover lid and having guide rails (5) on which the bridge, when fitted, rests such that it can be moved
**characterised in that**
the guide rails (5) are formed on free-standing, integrally formed columns (6) that run obliquely to the direction of movement of the bridge, both ends of these columns (6) being cast onto the associated upper and lower walls (8) of the calliper housing (2).

2. A brake calliper according to claim 1,
**characterised in that**
the opposing guide rails (5) are concave, in particular semi-circular, in design.

3. A brake calliper according to claim 1 or 2,
**characterised in that**
the columns (6) are positioned at a distance from the lateral inner walls (10) of the calliper housing (1).

4. A brake calliper according to any one of the preceding claims,
**characterised in that**
a lug (7) is integrally formed on each column (6) in order to extend the guide rail (5) in the direction of movement of the bridge.

5. A brake calliper according to any one of the preceding claims,
**characterised in that**
both columns (6) are polygonal, round or off-round in cross section.

6. A brake calliper according to any one of the preceding claims,
**characterised in that**
the cross-section dimensions of the two columns (6) taper from the two opposing bases (8) towards the centre.

7. A brake calliper according to any one of the preceding claims,
**characterised in that**
the two opposing columns (6) are connected to one another by means of webs (11) that are cast-n to each wall.

## Revendications

1. Etrier de frein en fonte d'un frein à disque pour un véhicule utilitaire comprenant, pouvant être fermé par un couvercle de fermeture et disposé dans une enveloppe (1) de l'étrier, un espace (2) de réception d'un pontet d'un dispositif de serrage, dans lequel l'espace (2) de réception a des voies (5) de guidage, sur lesquelles le pontet s'applique avec possibilité de coulisser à l'état monté,
**caractérisé en ce que**
les voies (5) de guidage sont constituées de colonnes (6) venues de matière, isolées, se faisant face transversalement à la direction de coulissement du pontet, qui sont coulées chacune par leurs deux extrémités sur les parois (8) supérieure et inférieure associées de l'enveloppe (1) de l'étrier.

2. Etrier de frein suivant la revendication 1,
**caractérisé en ce que**
les voies (5) de guidage se faisant face sont concaves, notamment sous la forme d'un demi-cercle.

3. Etrier de frein suivant la revendication 1 ou 2,
**caractérisé en ce que**
les colonnes (6) sont disposées à distance des parois (10) intérieures latérales de l'enveloppe (1) de l'étrier.

4. Etrier de frein suivant l'une des revendications précédentes,
**caractérisé en ce que**
pour prolonger la voie (5) de guidage, dans la direction de coulissement du pontet, une rallonge (7) est mise sur chaque colonne(6).

5. Etrier de frein suivant l'une des revendications précédentes,
**caractérisé en ce que**
chaque colonne (6) est constituée en section transversale d'une manière polygonale, circulaire ou non circulaire.

6. Etrier de frein suivant l'une des revendications précédentes,
**caractérisé en ce que**
la dimension en section transversale de chaque colonne (6) diminue, en partant des deux surfaces (8) de base se faisant face en allant vers le milieu.

7. Etrier de frein suivant l'une des revendications précédentes,
**caractérisé en ce que**
les deux colonnes (6) se faisant face sont reliées l'une à l'autre par des entretoises (11) coulées sur chaque paroi (8) .
